## Europäisches Patentamt
## European Patent Office
## Office européen des brevets

(11) Veröffentlichungsnummer: **0 315 736**
**A2**

# EUROPÄISCHE PATENTANMELDUNG

(21) Anmeldenummer: **88112110.7**

(22) Anmeldetag: **27.07.88**

(51) Int. Cl.⁴: **H04B 1/034**

(30) Priorität: **12.11.87 DE 8715049 U**

(43) Veröffentlichungstag der Anmeldung:
**17.05.89 Patentblatt 89/20**

(84) Benannte Vertragsstaaten:
**AT CH DE FR GB IT LI NL SE**

(71) Anmelder: **ROBERT BOSCH GMBH**
**Postfach 10 60 50**
**D-7000 Stuttgart 10(DE)**

(72) Erfinder: **Ketterling, Hans-Peter, Dipl.-Ing.**
**Manfred-von-Richthofen-Strasse 11**
**D-1000 Berlin 42(DE)**
Erfinder: **Siegle, Gert, Dr. Dipl.-Phys.**
**Kirchweg 7**
**D-1000 Berlin 38(DE)**
Erfinder: **Busch, Fritz**
**Gorgasring 24**
**D-1000 Berlin 20(DE)**
Erfinder: **Barsch, Klaus, Dipl.-Ing.**
**Lönnrotweg 9g**
**D-1000 Berlin 22(DE)**
Erfinder: **Wintzer, Ulrich**
**Mörchinger Strasse 38**
**D-1000 Berlin 37(DE)**

(74) Vertreter: **Schmidt, Hans-Ekhardt, Dipl.-Ing.**
**Robert Bosch GmbH Geschäftsbereich**
**Mobile Kommunikation Patent- und**
**Lizenzabteilung Forckenbeckstrasse 9-13**
**D-1000 Berlin 33(DE)**

(54) **Aus Akkumulatoren oder Batterien gespeistes tragbares Funkgerät.**

(57) Der Erfindung liegt die Aufgabe zugrunde, ein bekanntes tragbares Funkgerät, bei dem ein Akkumulator für die Stromversorgung in einer besonderen Tragvorrichtung untergebracht ist, zu vereinfachen.

Die Lösung der Aufgabe besteht darin, daß Gehäuse (11) des tragbaren Funkgerätes in einer Gehäusewand (12) eine Vertiefung (13) enthält, die ein Stromversorgungsblock (14) ausfüllt. Der Stromversorgungsblock weist mechanische Sperrmittel (18, 22) auf, die mit entsprechenden Sperrmitteln (19, 23) zu der Vertiefung (13) korrespondieren. An der Unterseite weist der Stromversorgungsblock Batteriekontakte (35, 36) auf, die mit entsprechenden Gegenkontakten (38, 39) an der Bodenwand (37) der Vertiefung Kontakt machen.

Ein bevorzugtes Anwendungsgebiet für die Erfindung ist ein Funktelefon.

Die Zeichnung zeigt in auseinandergezogener Darstellung ein Funkgerätegehäuse und zwei Stromversorgungsblöcke in verschiedener Ausführung.

Fig 1

## Aus Akkumulatoren oder Batterien gespeistes tragbares Funkgerät

Die Erfindung betrifft ein Funkgerät nach dem Oberbegriff des Anspruchs 1.

### Stand der Technik

Es ist ein tragbares Funkgerät bekannt (Siemens-Druckschrift Mobiltelefon C2, Impressum 741020 WS 028740), das in eine Tragvorrichtung einschiebbar ist, die einen Akkumulator für die Stromversorgung des Funkgerätes aufnimmt.

### Aufgabe

Der Erfindung liegt die Aufgabe zugrunde, ein tragbares Funkgerät, insbesondere ein Funktelefon, der gattungsgemäßen Art derart weiterzubilden daß auf eine separate Tragvorrichtung für die Stromquellen verzichtet werden kann.

### Lösung und erzielbare Vorteile

Diese Aufgabe wird bei einem gattungsgemäßen Funkgerät durch die kennzeichnenden Merkmale des Anspruchs 1 gelöst.

Die mit der Erfindung erzielbaren Vorteile bestehen insbesondere darin, daß für den Transport der Stromquelle für das tragbare Funkgerät keine separate Tragvorrichtung erforderlich ist. Ein weiterer Vorteil besteht darin, daß der Stromversorgungsblock im arretierten Zustand mechanisch und elektrisch sicher in der Vertiefung des Funkgerätegehäuses gehalten wird und daß Auswechseln des Stromversorgungsblocks für den Benutzer einfach zu bewerkstelligen ist.

Ein bevorzugtes Anwendungsgebiet für das erfindungsgemäße Funkgerät ist ein Funktelefon für das Funkfernsprechnetz C der Deutschen Bundespost.

### Beschreibung eines Ausführungsbeispiels

Ein Ausführungsbeispiel der Erfindung ist in der Zeichnung an Hand zweier Figuren dargestellt und wird im folgenden näher beschrieben. Es zeigen

Fig. 1 eine auseinandergezogene perspektivische Darstellung eines Funkgerätegehäuses mit einem Stromversorgungsblock in einer ersten und einer zweiten Ausführungsform und

Fig. 2 eine perspektivische Darstellung eines zu einem Stromversorgungsblock gehörenden Drehstücks in gegenüber Fig. 1 vergrößertem Maßstab.

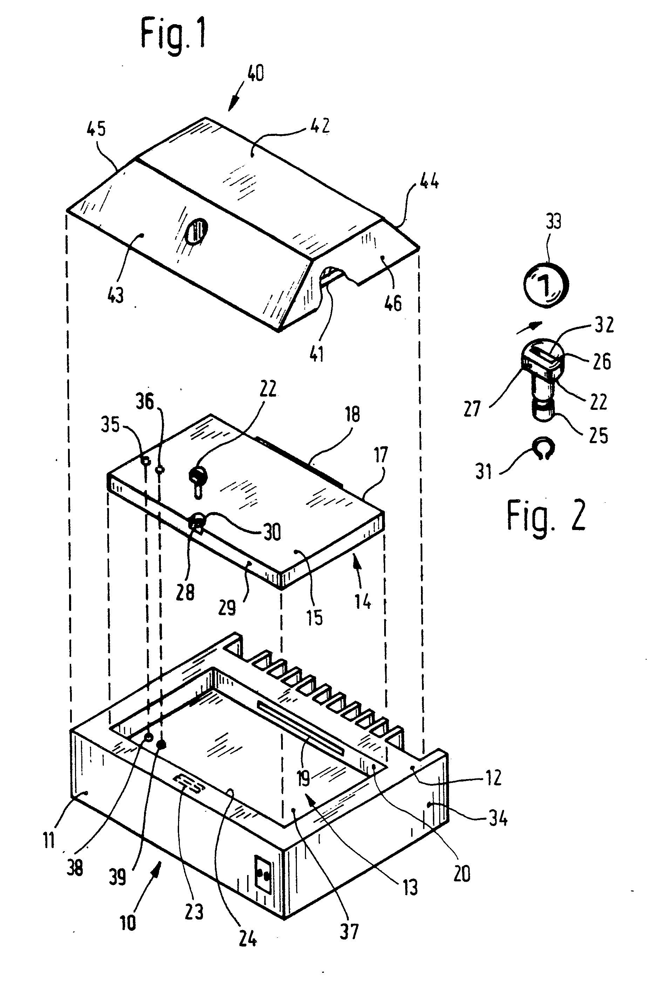

In Fig. 1 bezeichnet 10 ein Funkgerät, das ist vorzugsweise ein Funktelefon, mit einem quaderförmigen Gehäuse 11. Das Gehäuse enthält an einer Wand, vorzugsweise an seiner oberen Wand 12, eine quaderförmige Vertiefung 13, in die ein ebenfalls quaderförmiger Stromversorgungsblock 14 paßt, dessen Oberseite 15 bei in die Vertiefung eingesetztem Stromversorgungsblock mit der Oberseite 12 des Gehäuses 11 bündig abschließt.

Der Stromversorgungsblock 14 weist an einer Stirnseite, vorzugsweise einer längeren Stirnseite 17, einen leistenförmigen Vorsprung 18 auf, der mit einer entsprechenden länglichen Nut 19 in der entsprechenden Seitenwand 20 der Vertiefung 13 korrespondiert. Vorsprung 18 und Nut 19 bilden ein erstes mechanisches Sperrmittel für den Stromversorgungsblock 14. Ein zweites mechanisches Sperrmittel besteht aus einem Drehstück 22 des Stromversorgungsblocks in Verbindung mit einem Schlitz 23 in einer der Seitenwand 20 gegenüberliegenden Seitenwand 24 der Vertiefung 13 des Gehäuses 11.

Das Drehstück 22 - vgl. auch Fig. 2 - hat einen Schaft 25 mit einem zylindrischen Kopf 26, der eine Abflachung 27 aufweist. Der Schaft 25 paßt in eine entsprechende Öffnung 28 in dem der Stirnwand 17 gegenüberliegenden Randbereich des Stromversorgungsblocks 14. Die Öffnung 28 geht an der Oberseite 15 des Stromversorgungsblocks in eine zylindrische Erweiterung 30 über, die zur Aufnahme des Kopfes 26 des Drehstücks 22 dient. Das Drehstück wird durch einen auf den Endbereich des Schaftes 25 gesteckten Sicherungsring 31 in der Öffnung 28 drehbar, jedoch in axialer Richtung nicht verschiebbar festgehalten.

An der Oberseite des Kopfes 26 enthält dieser einen Schlitz 32 zum Einstecken eines Hilfswerkzeuges, das ist im einfachsten Fall ein Geldstück 33.

Der Stromversorgungsblock 14 trägt an seiner Unterseite Batteriekontakte 35, 36, denen in der Bodenwand 37 enthaltene Gegenkontakte 38, 39 zugeordnet sind.

Zum Einsetzen des Stromversorgungsblocks 14 in die Vertiefung 13 des Gehäuses 11 wird dieser mit seinem leistenförmigen Vorsprung 18 in die längliche Nut 19 gesteckt und dann vollständig in die Vertiefung hineingedrückt, wobei die Kontakte 35, 38 und 36, 39 Kontakt machen. Durch ein anschließendes Verdrehen des Drehstücks 22 mittels des Hilfswerkzeuges 33 tritt der der Abflachung 27 gegenüberliegende Bereich des Kopfes 26 aus der Stirnseite 29 heraus und gelangt in den Schlitz 23.

Zum späteren Öffnen und anschließenden Herausnehmen des Stromversorgungsblocks aus der Vertiefung 13 wird das Drehstück wieder in die in der Fig. 1 gezeigte Lage gedreht, in welcher die Abflachung 27 bündig mit der Stirnwand 29 abschließt.

In einer zweiten Ausführungsform weist ein Stromversorgungsblock 40 eine von dem Stromversorgungsblock 14 abweichende Form auf, die dadurch gekennzeichnet ist, daß sie aus einem quaderförmigen Teil 41 besteht, das in ein dachförmiges Teil 42 übergeht. Während das quaderförmige Teil 41 dem Stromversorgungsblock 14 entspricht, ragt das dachförmige Teil 42 aus der Vertiefung 13 heraus. Der Rand des Stromversorgungsteils 40 schließt mit dem Rand der Oberseite 12 des Gehäuses 11 ab. Das dachförmige Teil 42 weist drei schräge Dachflächen 43 bis 45 sowie eine Dachfläche 46 auf, die in der gleichen Ebene wie die Stirnwand 34 des Gehäuses 11 liegt. Dadurch kann das mit dem Stromversorgungsblock 40 aus gerüstete Funkgerät 10 wahlweise hochkant aufgestellt und betrieben werden, das heißt, daß es mit der Stirnwand 34 des Gehäuses 11 und der Dachfläche 46 des Stromversorgungsblocks auf einer ebenen Unterlage ruht. Der Stromversorgungsblock 40 enthält in gleicher Weise wie der Stromversorgungsblock 14 Sperrmittel, mit denen er in der Vertiefung 13 des Gehäuses 11 arretiert werden kann. Die vorzugsweise mehrere Akkumulatorzellen enthaltenden Stromversorgungsblöcke 14, 40 können nach dem Herausnehmen aus dem Gehäuse 11 in ein Ladegerät eingesteckt und aufgeladen bzw. nachgeladen werden.

**Ansprüche**

1. Aus Akkumulatoren oder Batterien gespeistes tragbares Funkgerät, dadurch gekennzeichnet, daß das Gehäuse (11) in einer Gehäusewand (12) eine Vertiefung (13) enthält, die ein der Form und den Abmessungen der Vertiefung angepaßter Stromversorgungsblock (14) ausfüllt, daß der Stromversorgungsblock mit mechanischen Sperrmitteln (18, 22) versehen ist, die mit entsprechenden Sperrmitteln (19, 23) der Vertiefung korrespondieren, und daß der Stromversorgungsblock an seiner Unterseite Batteriekontakte (35, 36) aufweist, die mit entsprechenden Gegenkontakten (38, 39) an der Bodenwand (37) der Vertiefung Kontakt machen.

2. Gehäuse nach Anspruch 1, dadurch gekennzeichnet, daß der Stromversorgungsblock (40) eine derartige Höhe aufweist, daß er zumindest teilweise aus der Oberseite (12) des Gehäuses (11) hervorsteht.

3. Gehäuse nach Anspruch 1 oder 2, dadurch gekennzeichnet, daß die Sperrmittel der Vertiefung (13) aus einer Nut (19) in einer Seitenwand (20) und aus einem Schlitz (23) in der gegenüberliegenden Seitenwand (24) und daß die Sperrmittel des Stromversorgungsblocks (14) aus einem leistenförmigen Vorsprung (18) an einer Stirnwand (17) und aus einem mit dem Schlitz (23) in Eingriff bringbaren Drehstück (22) im Bereich der gegenüberliegenden Stirnwand (29) bestehen.

4. Gehäuse nach Anspruch 2, dadurch gekennzeichnet, daß der Stromversorgungsblock (40) oberhalb der Oberseite (12) des Gehäuses (11) dachförmig ausgebildet ist, wobei der Rand des Daches mit dem Rand des Gehäuses (11) abschließt.

5. Gehäuse nach Anspruch 4, dadurch gekennzeichnet, daß der dachförmige Stromversorgungsblock eine Dachfläche (46) aufweist, die in der gleichen Ebene wie die zugehörige Seitenwand (34) des Gehäuses (11) liegt.

6. Gehäuse nach Anspruch 1 oder 3, dadurch gekennzeichnet, daß das Drehstück (22) einen Schaft (25) mit einem zylindrischen Kopf (26) aufweist, der eine Abflachung (27) hat, die bei in eine Öffnung (28) des Stromversorgungsblocks (14) eingesetztem und in eine bestimmte Lage gedrehtem Drehstück mit der Stirnwand (29) des Stromversorgungsblock (14) abschließt.

7. Gehäuse nach Anspruch 6, dadurch gekennzeichnet, daß der Kopf (26) des Drehstücks an seiner Oberseite einen Schlitz (32) zum Einführen eines Hilfswerkzeuges (33) enthält.

8. Gehäuse nach Anspruch 6 oder 7, dadurch gekennzeichnet, daß das in der Öffnung (28) des Stromversorgungsblocks (14) befindliche Drehstück (22) an der Unterseite des Stromversorgungsblocks durch einen Sicherungsring (31) drehsicher, jedoch axial unverschiebbar gehalten ist.

# Fig.1

# Fig. 2